# EUROPÄISCHE PATENTSCHRIFT

(11) **EP 0 920 063 B1**
(45) Veröffentlichungstag und Bekanntmachung des Hinweises auf die Patenterteilung: **08.05.2002**
(21) Anmeldenummer: 98117443.6
(22) Anmeldetag: 15.09.1998
(51) Int. Cl.: H01M 2/12, H01M 2/04

(54) **Stopfensystem zum Verschliessen von Zellenöffnungen eines Akkumulators und Akkumulatordeckel zur Verwendung des Stopfensystems**
Plug assembly for closing individual openings of the cells of an accumulator and lid for an accumulator to be used with said plug assembly
Montage de bouchon pour fermer d'ouvertures individuelles de cellules d'accumulateur et couvercle pour accumulateur

(30) Priorität: 19.11.1997 DE 19751136
(43) Veröffentlichungstag der Anmeldung: 02.06.1999
(73) Patentinhaber: Johnson Controls Batterien GmbH & Co. KG, 59929 Brilon (DE)
(72) Erfinder: Nann, Eberhard Dr., 59494 Soest-Deiringsen (DE); Wulf, Ulrich, 59494 Soest (DE)
(74) Vertreter: Stenger, Watzke & Ring Patentanwälte

(56) Entgegenhaltungen:
- EP-A- 0 305 822
- EP-A- 0 504 573
- EP-A- 0 554 535
- EP-A- 0 570 703
- EP-A- 0 584 528
- EP-A- 0 756 338
- US-A- 5 561 001

## Beschreibung

Die vorliegende Erfindung betrifft ein Stopfensystem zum Verschließen von Zellenöffnungen eines Akkumulators und einen Akkumulatordeckel zur Verwendung des Stopfensystems.

Akkumulatoren bestehen aus zwei chemisch unterschiedlichen Elektroden, die in einem Gehäuse mit Deckel in einem meist flüssigen oder eingedickten Elektrolyten angeordnet sind. Bei den in der Regel für Kraftfahrzeuge verwendeten Bleiakkumulatoren bestehen die Elektroden aus Blei und sind gitterförmig ausgestaltet. Die Maschen des Gitters sind auf der positiven Seite mit Bleidioxid PbO₂ und auf der negativen Seite mit sogenanntem Bleischwamm, feinverteiltem, porösem Blei, gefüllt. Als Elektrolyt wird in der Regel Schwefelsäure H₂SO₄ verwendet. Bei Bleiakkumulatoren, insbesondere für Kraftfahrzeuge, sind mehrere Zellen hintereinander geschaltet. Dabei ist jeweils eine Seite der Anfangszelle und eine Seite der Endzelle mit einem Pol zur Kontaktierung versehen, die jeweils den Deckel des Gehäuses durchragen. Bei den Ladevorgängen vollziehen sich chemische Reaktionen, die zur Gasentwicklung führen. Zur Entgasung weist der Akkumulator meist in seinem Deckel Gasauslaßöffnungen auf.

Um einerseits die Elektrolytverdunstung zu verhindern bzw. zu reduzieren und zum anderen die bei einer Überladung des Akkumulators entstehenden Gase vor Erreichen eines kritischen Überdrucks im Zelleninneren nach außen an die den Akkumulator umgebende Atmosphäre abführen zu können, werden die einzelnen Zellen eines Akkumulators in der Regel mittels als Überdruckventil ausgebildete Stopfen verschlossen. Um ein Explodieren der Akkumulatoren zu verhindern, sind zum Abführen der entstehenden, leicht entzündlichen Gase zwei grundlegende Entgasungsmöglichkeiten bekannt. Zum einen erfolgt die Gasableitung direkt über die die einzelnen Zellenöffnungen verschließenden Stopfen, zum anderen über eine zentrale Gasableitung, bei der die einzelnen Zellenöffnungen über eine Querbohrung im Deckel des Akkumulatorengehäuses miteinander verbunden sind. Bei der letzten Entgasungsvariante werden die Zellenöffnungen im Akkumulatorengehäuse oberhalb des durch die Querbohrung geschaffenen Kanals gasdicht verschlossen und in der Regel stirnseitig des Deckels herausgeführt. Bei beiden Gasableitungsmöglichkeiten werden die Gase vor dem Austritt aus dem Akkumulator durch eine poröse Filterscheibe, einer sogenannten Fritte, geleitet, insbesondere um Rückzündungen ins Akkumulatoreninnere und damit verbundene Beschädigungen zu vermeiden.

Der vorliegenden Erfindung liegt die **Aufgabe** zugrunde, ein Stopfensystem zum Verschließen von Zellenöffnungen eines Akkumulators bereitzustellen, das aus möglichst wenig einfachen Elementen besteht und durch Kombination der einzelnen Elemente an unterschiedliche Akkumulatorenbauformen anpaßbar ist, individuellen Bedürfnissen einzelner Akkumulatoren gerecht werden kann und die im Zusammenhang mit den prinzipiellen Entgasungsvarianten gestellten Anforderungen erfüllt, insbesondere hinsichtlich Rückzündschutz und Dichtigkeit. Darüber hinaus soll das erfindungsgemäße Stopfensystem besonders wirtschaftlich hinsichtlich Herstellung, Montage und Lagerhaltung sein.

Zur **Lösung** dieser Aufgabe wird mit der vorliegenden Erfindung ein Stopfensystem zum Verschließen von Zellenöffnungen eines Akkumulators, bestehend aus einem in eine Zellenöffnung einsetzbaren, ein Ventilelement und einen Stopfen aufnehmenden, so eine normalerweise geschlossene, strömungstechnische Verbindung zwischen dem Zelleninneren und der den Akkumulator umgebenden Atmosphäre bereitstellenden Stopfenkörper vorgeschlagen.

Das erfindungsgemäße Stopfensystem besteht somit im wesentlichen aus drei einfachen Grundelementen, die geringe Herstellungs-, Montage- und Lagerhaltungskosten sowie einen geringen Aufwand bei der Bereitstellung der entsprechenden fertigungstechnischen Einrichtungen mit sich bringen und an die Anforderungen unterschiedlicher Akkumulatorenbauformen und Entgasungsvarianten problemlos anpaßbar sind.

In einer vorteilhaften Ausgestaltung der Erfindung weist der Stopfenkörper wenigsten einen gegenüber dem Stopfenkörperaußendurchmesser reduzierten Abschnitt auf. Dadurch wird an einem Ende der Mantelfläche des Stopfenkörpers ein im wesentlichen ringförmiger Vorsprung gebildet, der eine im wesentlichen ringförmige Anschlagfläche zur Anlage an der die Zellenöffnung des Akkumulatorendeckels umgebenden äußeren Stirnfläche bereitstellt und beispielsweise ein einfaches und genaues Einsetzen des Stopfenkörpers in der Zellenöffnung ermöglicht. Vorteilhafterweise weist der Akkumulatorendeckel eine entsprechend dem ringförmigen Vorsprung des Stopfenkörpers negativ ausgebildete Aufnahme auf, die zumindest eine der durch den Vorsprung gebildeten ringförmigen Anschlagfläche entsprechende Stirnfläche zur Anlage bereitstellt. Des weiteren kann der im wesentlichen ringförmige Vorsprung des Stopfenkörpers zur Befestigung des Stopfenkörpers in der Zellenöffnung verwendet werden. Dazu kann der Vorsprung beispielsweise an seiner Außenseite ein Befestigungselement aufweisen oder aber im Bereich des Vorsprungs in der Zellenöffnung eingeklebt, eingeschweißt oder sonstwie mit dem Deckel verbunden werden. Vorteilhafterweise ist der Stopfenkörper dicht, insbesondere gasdicht in die Zellenöffnung einsetzbar. Dazu weist der Stopfenkörper wenigstens ein Dichtungselement auf, vorzugsweise einen O-Ring. Gemäß einer besonders vorteilhaften Ausgestaltung der Erfindung ist das Dichtungselement am Stopfenkörper angeformt und ist beispielsweise ein am Stopfenkörper angespritzter Dichtring, wobei die Herstellung dann in einem Zweikomponentenverfahren erfolgen kann. Vorteilhafterweise ist das Dichtungselement in einem an den ringförmigen Vorsprung angrenzenden Bereich des Stopfenkörpers angeordnet. Dadurch wird gewährleistet, daß der Stopfenkörper sicher gasdicht in die Zellenöffnung einsetzbar ist. Ebenso kann der ringförmige Vorsprung des Stopfenkörpers einen Bereich aufweisen, der das Dichtelement zumindest teilweise aufnimmt. Des weiteren kann der Vorsprung konisch ausgebildet sein, so daß beim Einsetzen des Stopfenkörpers in die Zellenöffnung eine Führung gegeben ist, die auch ein falsches Einsetzen verhindern kann.

In einer weiteren besonders vorteilhaften Ausgestaltung der Erfindung weist der Stopfenkörper in einem Mittelteil wenigstens einen gegenüber dem Stopfenkörperaußendurchmesser reduzierten Abschnitt mit wenigstens einer Öffnung auf. Vorteilhafterweise sind die gegenüber dem Mittelteil des Stopfenkörpers vergrößerten Abschnitte ringförmig ausgebildet, so daß bei eingesetztem Stopfenkörper zwischen dem mittleren, reduzierten Abschnitt des Stopfenkörpers und dem Gehäusedeckel des Akkumulators ein Volumenraum gebildet wird, der durch die wenigstens eine Öffnung in dem reduzierten Abschnitt eine strömungstechnische Verbindung zum Zelleninneren hat. Vorteilhafterweise ist der durch den reduzierten Abschnitt im Mittelteil des Stopfenkörpers und dem Gehäusedeckel des Akkumulators beim Einsetzen des Stopfenkörpers gebildete Volumenraum gasdicht. Vorteilhafterweise weisen dazu die sich an den reduzierten Abschnitt im Mittelteil des Stopfenkörpers anschließenden Abschnitte jeweils ein Dichtungselement auf, vorzugsweise einen angeformten O-Ring.

In einer weiteren vorteilhaften Ausgestaltung der Erfindung weist der Stopfenkörper an seinem dem Zelleninneren zugewandten Ende ein Befestigungselement auf, mit dem der Stopfenkörper im Gehäusedeckel befestigbar ist. Hierzu weist der Stopfenkörper beispielsweise an seinem Ende wenigstens einen den Gehäusedeckel hintergreifenden Vorsprung auf. Durch den Vorsprung wird der Stopfenkörper beim Einsetzen im Gehäusedeckel fixiert und kann nicht mehr aus diesem entfernt werden. Vorteilhafterweise wird der Stopfenkörper beim Einsetzen mittels einer Pressung im Gehäusedeckel festgelegt. Dadurch ist der Stopfenkörper zum einen sicher befestigt und zum anderen wird ein weitestgehend gasdichtes Einsetzen ermöglicht. In einer weiteren besonders vorteilhaften Ausgestaltung der Erfindung weist der Stopfenkörper in wenigstens einem der sich an den reduzierten Abschnitt angrenzenden Abschnitte des Stopfenkörpers als Befestigungselement ein Gewinde auf, welches mit einem im Gehäusedeckel entsprechend vorgesehenen Gewinde korrespondiert.

Gemäß einer weiteren vorteilhaften Ausgestaltung der Erfindung weist der Stopfenkörper im Inneren einen Abschnitt zur Aufnahme des Ventilelementes auf. Dadurch ist das Ventilelement überaus einfach und problemlos im Stopfenkörper anordbar. Vorteilhafterweise grenzt der Abschnitt zur Aufnahme des Ventilelementes an die wenigstens eine Öffnung in der Mantelfläche des Stopfenkörpers an, so daß das Ventilelement im Normalfall die strömungstechnische Verbindung zwischen dem von dem reduzierten Abschnitt des Stopfenkörpers und dem Gehäusedeckel gebildeten Volumenraum und dem Zelleninneren im Normalfall verschließt. Darüber hinaus kann so die Öffnung in der Mantelfläche des Stopfenkörpers nicht versehentlich durch Anordnen des Ventilelementes verschlossen werden. Vorteilhafterweise bildet der Abschnitt zur Aufnahme des Ventilelementes einen Absatz, auf den das Ventilelement aufgelagert werden kann. In einer weiteren vorteilhaften Ausgestaltung der Erfindung ist die Mantelfläche des Abschnitts zur Aufnahme des Ventilelementes leicht konisch ausgebildet, so daß das Ventilelement durch leichte Preßpassung im Stopfenkörper fixierbar ist. Ebenso ist es möglich, daß das Ventilelement leicht konische Außenwandungen aufweist, die eine leichte Preßpassung im Bereich des zur Aufnahme vorgesehenen Abschnitts im Inneren des Stopfenkörpers ermöglichen. In einer weiteren vorteilhaften Ausgestaltung der Erfindung weist der Stopfenkörper im Bereich des Abschnitts wenigstens einen Vorsprung zur Fixierung des Ventilelementes im Bereich des Abschnitts auf. Vorzugsweise ist dieser Vorsprung ringförmig ausgebildet.

In einer weiteren vorteilhaften Ausgestaltung der Erfindung weist der Stopfenkörper im Inneren wenigstens eine eine Schikane bildende Zwischenwand auf, die vorzugsweise in einem sich in Richtung des Zelleninneren an das Ventilelement angrenzenden Abschnitt angeordnet ist. Die wenigstens eine eine Schikane bildende Zwischenwand zwingt ein aus dem Zelleninneren strömendes Gas zur Strömungsrichtungsänderung und hält so mitgerissene Flüssigkeit zum Schutz der Dichtungselemente, beispielsweise einer Gummimembran des Ventilelementes, zurück. Darüber hinaus kann das ausströmende Gas sich an der Zwischenwand niederschlagen und so können sich Flüssigkeitsteilchen an der Wand kondensieren und wieder ins Zelleninnere zurückfließen.

Gemäß einer weiteren vorteilhaften Ausgestaltung der Erfindung weist der Stopfen eine Öffnung auf. Dadurch wird die Möglichkeit geschaffen, eine Entgasung über den Zellenverschluß zu ermöglichen. Vorteilhafterweise ist die Öffnung im Stopfen mittig angeordnet.

In einer weiteren vorteilhaften Ausgestaltung der Erfindung ist der Stopfen formschlüssig im Stopfenkörper einsetzbar. Dadurch wird gewährleistet, daß der Stopfen, insbesondere im Bereich der Zellenöffnung, bündig mit dem Stopfenkörper abschließt. Vorteilhafterweise ist der Stopfen dicht in den Stopfenkörper einsetzbar. Dadurch wird gewährleistet, daß eine strömungstechnische Verbindung nur durch die dafür vorgesehenen Öffnungen erfolgen kann. Vorteilhafterweise ist der Stopfen im Stopfenkörper befestigbar. Dazu kann der Stopfen zum einen mit einem Befestigungselement, beispielsweise einem mit dem Stopfenkörper korrespondierenden Gewinde oder durch Verkleben, Verschweißen, beispielsweise Ultraschallschweißen oder dgl., befestigt werden. In vorteilhafter Weise wird der Stopfen im Stopfenkörper mittels einer Preßpassung fixiert. Dadurch wird zum einen eine Abdichtung des Stopfens im Stopfenkörper erzielt und zum anderen eine überaus einfache Befestigung bereitgestellt.

Gemäß einer weiteren besonders vorteilhaften Ausgestaltung der Erfindung weist der Stopfen im Inneren einen Abschnitt zur Aufnahme einer Filterscheibe auf. Vorteilhafterweise weist der Stopfen zur Fixierung der Filterscheibe in der dafür vorgesehenen Aufnahme wenigstens einen Vorsprung auf, der vorzugsweise ringförmig ausgebildet ist und die Filterscheibe im eingesetzten Zustand hintergreift.

In einer weiteren besonders vorteilhaften Ausgestaltung der Erfindung ist der Stopfen die Öffnung in der Mantelfläche des Stopfenkörpers verschließend in den Stopfenkörper einsetzbar. Dadurch läßt sich mit nur einem Stopfenkörper sowohl eine Zentralentgasung über einen im Akkumulatorendeckel vorgesehenen Querkanal, als auch eine Entgasung über den jeweiligen Zellenverschluß bereitstellen.

In einer weiteren besonders vorteilhaften Ausgestaltung der Erfindung lassen sich mit einem Stopfen mit einer exzentrischen Durchlaßöffnung und einem Stopfenkörper mit einem reduzierten Mittelabschnitt mit Öffnung jeweils durch unterschiedliche Einsetzpositionen des Stopfens im Stopfenkörper sowohl eine zentrale Entgasung als auch eine Entgasung über den Zellenverschluß, also den Stopfen, realisieren. Dabei wird in der ersten Einsetzposition beispielsweise die Öffnung im Mantel des Stopfenkörpers vom Stopfen verschlossen und einer zweiten Einsetzposition die Öffnung im Stopfen vom Stopfenkörper verschlossen.

Vorteilhafterweise ist das im Stopfenkörper eingesetzte Ventilelement ein Überdruckventil, so daß ein normalerweise geschlossenes Ventil bereitgestellt ist, das erst bei einem gewissen Druck im Zelleninneren öffnet. Vorteilhafterweise ist die Öffnung des Ventils proportional zum Überdruck im Zelleninneren.

Desweiteren wird mit der vorliegenden Erfindung ein Akkumulatorendeckel zur Verwendung des erfindungsgemäßen Stopfensystems vorgeschlagen, der hinsichtlich rückzündungssicherer Entgasung gekennzeichnet ist durch einen im Akkumulatorendeckel einsetzbaren, eine strömungstechnische Verbindung zwischen dem Zelleninneren und der den Akkumulator umgebenden Atmosphäre bereitstellenden Einsatz, der eine stirnseitige Entgasung ermöglicht. Vorteilhafterweise bildet der Einsatz einen trichterförmigen Kanal aus und weist wenigstens eine Aufnahme für ein Filterelement auf. Die Filterscheibe kann dabei im Gas vorhandene Flüssigkeitsteilchen zurückhalten und durch die Ausgestaltung des Kanals, der vorteilhafterweise im wesentlichen senkrecht zu einem zentralen Entgasungskanal im Akkumulatorendeckel verläuft, ist der Gasstrom Richtungsänderungen unterworfen. Durch den trichterförmigen Verlauf wird dabei der für das Gas gegebene Volumenraum in Richtung der Entgasungsöffnung immer weiter reduziert, so daß das ausströmende, sich an den Wandungen des Trichters niederschlagende Gas weiter kondensiert und ins Zelleninnere zurückfließen kann.

Gemäß einer weiteren vorteilhaften Ausgestaltung der Erfindung ist das Filterelement unmittelbar an den durch einen Stopfenkörper und den Akkumulatorendeckel gebildeten Volumenraum angrenzend anordbar, so daß Flammen von Rückzündungen nicht in das Innere des Akkumulators durchschlagen können. Vorteilhafterweise ist die Filterscheibe des Einsatzes genau so groß wie die Filterscheibe des Stopfensystems.

Gemäß einer weiteren vorteilhaften Ausgestaltung der Erfindung ist der Einsatz dicht in den Akkumulatorendeckel einsetzbar. Dazu kann dieser beispielsweise formschlüssig in den Akkumulatorendeckel eingesetzt, eingeklebt, eingeschweißt, verschraubt oder sonstwie befestigt werden.

Gemäß einer weiteren besonders vorteilhaften Ausgestaltung der Erfindung wird für den Einsatz das erfindungsgemäße Stopfensystem verwendet. Dadurch werden zum einen die Einsatzmöglichkeiten des Stopfensystems weiter vergrößert und zum anderen mit einer geringen Anzahl von Bauteilen neben einem Verschließen der Zellenöffnungen eines Akkumulators desweiteren mit dem gleichen Stopfensystem eine stirnseitige Entgasung ermöglicht.

Gemäß einer weiteren besonders vorteilhaften Ausgestaltung der Erfindung weist der Akkumulatorendeckel im Bereich der Zellenöffnungen nockenartige Vorsprünge auf, die ein axiales Abdichten der Zellenöffnungen ermöglichen. Durch diese Ausgestaltung der Zellenöffnungen des Akkumulatorendeckels läßt sich dieser durch Einsetzen eines mit Dichtungselementen versehenen Stopfenkörpers sowohl radial als auch axial sicher abdichten. Dadurch wird die Dichtigkeit des Akkumulators weiter vergrößert. Die Ausgestaltung der Zellenöffnungen eines Akkumulatordeckels mit nockenartigen Vorsprüngen kann vorteilhafterweise auch ohne das erfindungsgemäße Stopfensystem verwendet werden und auch bei anderen Akkumulatorendeckeln oder Einsätzen realisiert werden.

Weitere Vorteile und Merkmale der Erfindung werden im folgenden anhand der in den Figuren dargestellten Ausführungsbeispiele näher erläutert. Dabei zeigen:
- Fig. 1a: eine geschnittene Ansicht eines Ausführungsbeispiels gemäß des erfindungsgemäßen Stopfensystems;
- Fig. 1b: eine Draufsicht gemäß Fig. 1a;
- Fig. 2a: eine weitere geschnittene Ansicht eines Ausführungsbeispiels des erfindungsgemäßen Stopfensystems;
- Fig. 2b: eine Draufsicht gemäß Fig. 2a;
- Fig. 3: eine geschnittene Ansicht durch den Gehäusedeckel eines Akkumulators mit einem eingesetzten Stopfensystem gemäß Fig. 1a;
- Fig. 4: in teilweise geschnittener Darstellung eine Draufsicht auf einen Akkumulator mit einem Ausführungsbeispiel eines erfindungsgemäßen Stopfensystems ähnlich Fig. 1a und 1b sowie 3;
- Fig. 5: eine teilweise geschnittene Draufsicht auf ein Ausführungsbeispiel eines Akkumulators mit einem Ausführungsbeispiel eines Stopfensystems ähnlich Fig. 1a und 1b sowie 3 und
- Fig. 6: eine geschnittene Ansicht eines weiteren Ausführungsbeispiels des erfindungsgemäßen Stopfensystems mit einer weiteren Ausgestaltung der Dichtungselemehte.

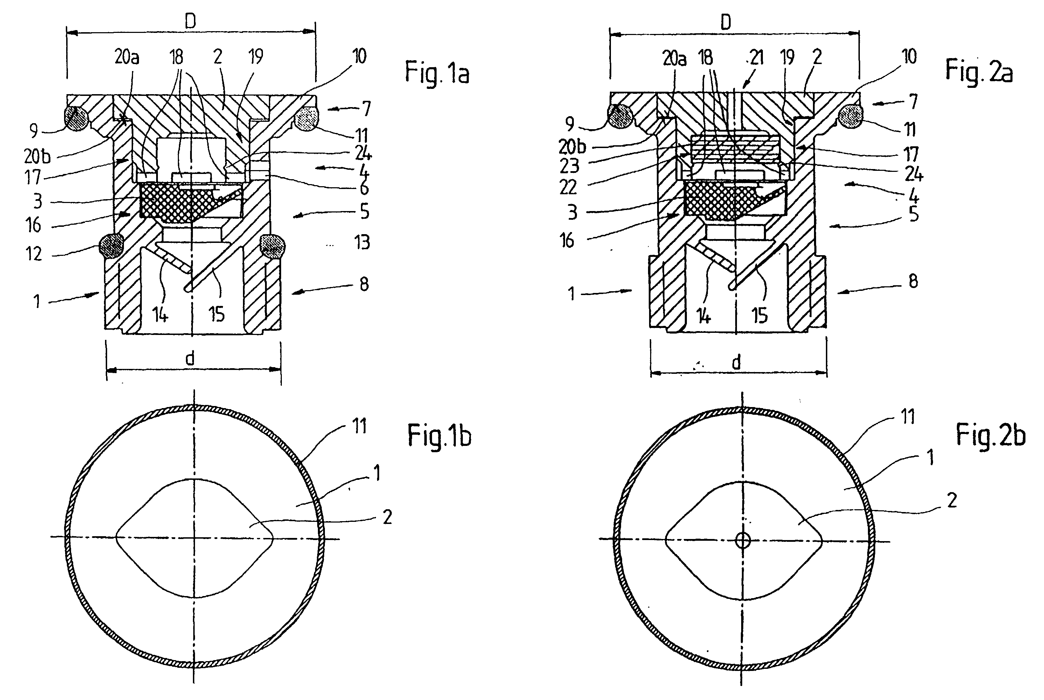

Fig. 1a zeigt in einer geschnittenen Ansicht einen in eine Zellenöffnung einsetzbaren Stopfenkörper 1, in welchem ein Stopfen 2 und ein Ventilelement 3 angeordnet sind. Der Stopfenkörper 1 ist im wesentlichen aus einem Kreiszylinder gefertigt, welcher in einem Mittelteil 4 einen gegenüber dem Stopfenkörperaußendurchmesser D reduzierten Abschnitt 5 mit einer Öffnung 6 aufweist. Durch den reduzierten Abschnitt 5 werden an den Enden des Stopfenkörpers 1 jeweils einen ringförmigen Vorsprung bildende Abschnitte 7 und 8 ausgebildet, wobei der Abschnitt 8 einen gegenüber dem reduzierten Abschnitt 5 vergrößerten, gegenüber dem dem Stopfenkörperaußendurchmesser D jedoch reduzierten Außendurchmesser d aufweist.

Durch den Abschnitt 7 wird ein eine ringförmige Anschlagfläche 9 bildender Vorsprung 10 zur Anlage an einer die Zellenöffnung eines Akkumulatorengehäuses umgebenden äußeren Stirnfläche bereitgestellt. Im vorliegenden Fall ist der ringförmige Vorsprung 10 im Bereich der Anschlagfläche 9 mit einem Dichtungselement 11 versehen, welches hier durch einen angeformten O-Ring gebildet ist.

Im Bereich des Übergangs vom reduzierten Abschnitt 5 zum zum Zelleninneren weisenden Abschnitt 8 ist der Stopfenkörper 1 mit einem weiteren Dichtungselement 12 versehen, welcher hier in einer im Stopfenkörper 1 vorgesehenen Aufnahme 13 ebenfalls am Stopfenkörper 1 angeformt ist.

Im Inneren weist der Stopfenkörper 1 in der Höhe des Übergangs von Abschnitt 5 nach Abschnitt 8 zwei jeweils eine Schikane bildende Zwischenwände 14 und 15 auf, die aus dem Zelleninneren strömende Gase zur Strömungsrichtungsänderung zwingen und mitgeführte Elektrolytflüssigkeit zurückhalten.

Im reduzierten Abschnitt 5 weist der Stopfenkörper 1 in seinem Inneren einen Abschnitt 16 zur Aufnahme des als Überdruckventils ausgebildeten Ventilelementes 3 auf, der so angeordnet ist, daß das Ventilelement 3 im eingesetzten Zustand an die Öffnung 6 im Abschnitt 5 angrenzt. Im Bereich des Übergangs vom Abschnitt 5 zum Abschnitt 8 ist der Stopfenkörper 1 im Inneren durch mehrere an das Ventilelement 3 angrenzende Abschnitte sich trichterförmig verjüngend ausgebildet. Oberhalb des Ventilelementes 3 weist der Stopfenkörper 1 im Inneren einen gegenüber dem Abschnitt 16 erweiterten Abschnitt 17 auf, welcher radial angeordnete Vorsprünge 18 zur Sicherung des Ventilelementes 3 in der Aufnahme 16 des Stopfenkörpers 1 aufweist.

In dem Stopfenkörper 1 ist im Bereich 7 der Stopfen 2 bündig mit dem Stopfenkörper 1 abschließend eingesetzt, wobei der Stopfen 2 einen gegenüber seinem Außendurchmesser reduzierten Abschnitt 19 aufweist, der in seinem Außendurchmesser dem Innendurchmesser des Abschnitt 17 des Stopfenkörpers 1 entspricht. Durch den reduzierten Abschnitt 19 bildet der Stopfen 2 im Bereich des Abschnitts 7 des Stopfenkörpers 1 eine ringförmige Anschlag- bzw. Anlagefläche 20a bzw. 20b aus. Der Stopfen 2 ist im Bereich seines Abschnitts 19 im Abschnitt 17 des Stopfenkörpers 1 in diesen gasdicht eingepreßt. Zusätzlich kann der Stopfen 2 im Bereich seiner Anlagefläche 20a mit dem Stopfenkörper 1 im Bereich des Abschnitts 7 mit diesem verschweißt sein. Wie anhand von Fig. 1b zu erkennen, weist der Stopfenkörper 1 einen kreisrunden Querschnitt auf, während der Stopfen 2 einem im wesentlichen ovalen, zitronenförmigen Querschnitt aufweist.

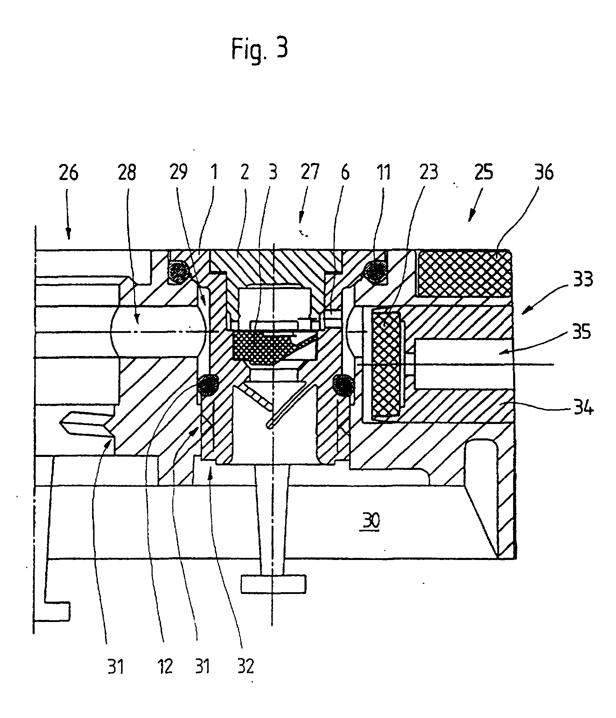

Das in Fig. 1a und 1b dargestellte Stopfensystem zum Verschließen von Zellenöffnungen eines Akkumulators stellt die Möglichkeit einer zentralen Gasableitung über eine die Zellenöffnungen im Gehäusedeckel miteinander verbindende Querbohrung bereit, wobei eine strömungstechnische Verbindung zwischen dem den Abschnitt 5 umgebenden Raum und dem Zelleninneren über die Öffnung 6 im Stopfenkörper 1, das Ventilelement 3 und den die Zwischenwände 14 und 15 aufnehmenden Abschnitt im Inneren des Stopfenkörpers 1 bereitgestellt wird, wie im weiteren im Zusammenhang mit Fig. 3 noch näher erläutert.

Fig. 2a und 2b zeigen jeweils ein weiteres Ausführungsbeispiel für ein Stopfensystem zum Verschließen von Zellenöffnungen eines Akkumulators. Fig. 2a zeigt ebenfalls einen im wesentlichen zylinderförmigen, in eine Zellenöffnung einsetzbaren, einen Stopfen 2 und ein Ventilelement 3 aufnehmenden Stopfenkörper 1, der so eine normalerweise geschlossene, strömungstechnische Verbindung zwischen dem Zelleninneren und der den Akkumulator umgebenden Atmosphäre bereitstellt. Im Gegensatz zu dem in den Fig. 1a und 1b dargestellten Stopfenkörper 1 weist der in den Fig. 2a und 2b dargestellte Stopfenkörper 1 in seinem reduzierten Abschnitt 5 keine Öffnung 6 auf. Desweiteren ist der in den Fig. 2a und 2b dargestellte Stopfenkörper 1 nur im Bereich des Abschnitts 7 mit einem im Bereich der ringförmigen Anschlagfläche 9 angeformten Dichtungselement 11 zum gasdichten Einsetzen in eine Zellenöffnung versehen. Der Stopfen 2 des Stopfensystems gemäß Fig. 2a und 2b weist eine mittig angeordnete Öffnung 21 auf, welche eine strömungstechnische Verbindung zwischen dem Zelleninneren und der den Akkumulator umgebenden Atmosphäre bereitstellt.

Der Stopfen 2 weist im Inneren einen an die Öffnung 21 angrenzenden Abschnitt 22 auf, welcher im vorliegenden Fall eine Filterscheibe 23 aufnimmt. Der Stopfen 2 weist einen sich an den Abschnitt 22 anschließenden ringförmigen Vorsprung 24 auf, der zur Fixierung der Filterscheibe 23 im Stopfen 2 dient. Dadurch kann die Filterscheibe 23 überaus einfach vor der Montage des Stopfens 2 in dem Stopfenkörper 1 im Stopfenkörper 2 verliersicher und gasdicht angeordnet werden.

Fig. 3 zeigt in einer geschnittenen Ansicht einen Ausschnitt eines Akkumulatorendeckels 25 mit einer teilweise dargestellten offenen Zellenöffnung 26 und einer mit einem Stopfensystem gemäß den Fig. 1a und 1b verschlossenen Zellenöffnung 27. Der Akkumulatorendeckel weist einen die Zellenöffnungen 26 und 27 miteinander strömungstechnisch verbindenden Kanal 28 auf, der durch eine Querbohrung im Akkumulatorendeckel 25 ausgebildet ist. Zwischen dem Akkumulatorendeckel 25 und dem Stopfenkörper 1 des Stopfensystems wird im Bereich des Abschnitts 5 des Stopfenkörpers 1 ein den Stopfenkörper 1 ringförmig umgebender Volumenraum 29 ausgebildet, welcher über die Öffnung 6 im Stopfenkörper 1 eine strömungstechnische Verbindung mit dem Zelleninneren 30 bereitstellt, die normalerweise durch das Ventilelement 3 unterbrochen ist. Der Volumenraum 29 ist durch die am Stopfenkörper 1 angeformten Dichtungselemente 11 und 12 im Bereich des Akkumulatorendeckels 25 gasdicht abgeschlossen.

Der Akkumulatorendeckel 25 weist in einem Bereich, in welchem der Abschnitt 8 des Stopfenkörpers 1 im eingesetzten Zustand zu liegen kommt, einen Vorsprung 31 auf, welcher formschlüssig in eine im Bereich des Abschnitts 8 des Stopfenkörpers 1 vorgesehene Aufnahme 32 zur Fixierung des Stopfenkörpers 1 in der Zellenöffnung eingreift.

Der Akkumulatorendeckel 25 weist eine seitlich im Akkumulatorendeckel 25 angeordnete Aufnahmeöffnung 33 auf, welche strömungstechnisch mit dem im wesentlichen senkrecht zu der Stopfeneinsetzrichtung verlaufenden Kanal 28 verbunden ist. Die seitliche Aufnahmeöffnung 33 dient somit einer zentralen Entgasung. In die Aufnahmeöffnung 33 ist ein topfförmiger Einsatz 34 eingesetzt, welcher einen zentrale, senkrecht zu der Stopfeneinsetzrichtung verlaufenden Kanal 35 aufweist, welcher eine strömungstechnische Verbindung zwischen dem Kanal 28 und der den Akkumulator umgebenden Atmosphäre schafft. Im wesentlichen senkrecht zum Verlauf des Kanals 35 ist im Einsatz 34 eine Filterscheibe 23 so eingesetzt, daß diese unmittelbar an den Kanal 28 bzw. den Volumenraum 29 angrenzt. Dadurch wird verhindert, daß im Falle von Rückzündungen Flammen in das Innere des Akkumulators durchschlagen können. Darüber hinaus werden durch die Filterscheibe 23 im Gas vorhandene Flüssigkeitsteilchen zurückgehalten. Wie in Fig. 3 dargestellt, ist der Einsatz 34 im Bereich der Filterscheibe 23 an seiner Außenseite leicht konisch ausgebildet. Der Einsatz 34 ist in der Aufnahmeöffnung 33 eingepreßt und schafft so eine gasdichte Verbindung zwischen dem Akkumulatorendeckel 25 und dem Einsatz 34. In Fig. 3 zu erkennen ist der Einsatz 34 im Bereich der Filterscheibe 23 an seiner Außenseite leicht konisch ausgebildet, so daß dieser besonders einfach in die Aufnahmeöffnung 33 eingesetzt werden kann. Selbstverständlich kann der Einsatz 34 in der Aufnahmeöffnung 33 auch eingeklebt, eingeschweißt, verschraubt oder sonstwie befestigt sein.

Anstelle der seitlich angeordneten Aufnahmeöffnung 33 mit dem topfförmigen Einsatz 34 zur seitlichen Entgasung können auch die in den Fig. 1a und 1b sowie 2a und 2b dargestellten Stopfensysteme kombiniert werden. So kann beispielsweise eine zentrale Entgasung mit dem Stopfensystem gemäß Fig. 1a und 1b aufgebaut werden und als Entgasungsstelle ein Stopfensystem gemäß Fig. 2a und 2b verwendet werden. Selbstverständlich sind auch andere Kombinationen für verschiedene Entgasungsvarianten einsetzbar. Auch kann für den Einsatz 34 ein Stopfenkörper 1 mit Stopfen 2 und Ventilelement 3 entsprechend dem Stopfensystem eingesetzt werden. Dazu muß selbstverständlich die Aufnahmeöffnung 33 entsprechend den Zellenöffnungen ausgebildet sein.

Anhand des in Fig. 3 dargestellten Stopfensystems im Zusammenhang mit dem Akkumulatorendeckel 25 wird die Vielfältigkeit des Stopfensystems mit rückzündungssicherer Entgasung deutlich. Das Stopfensystem und der Einsatz 34 haben dabei die gleiche Größe bzw. der Einsatz 34 wird - wie bereits erläutert - ebenfalls von dem Stopfensystem gebildet.

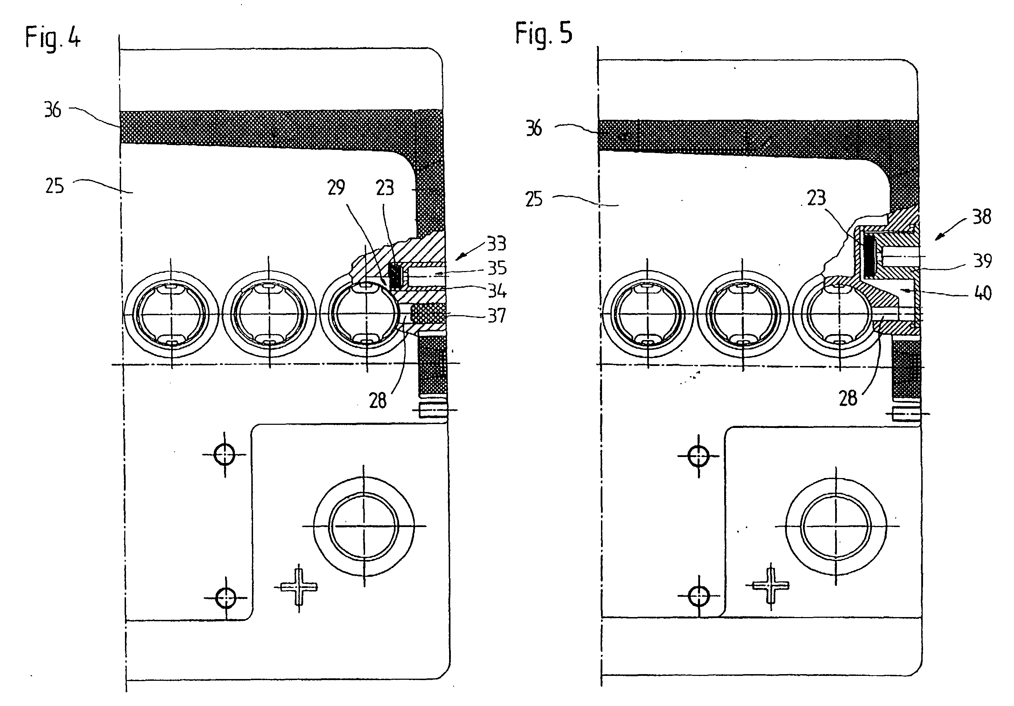

In den Fig. 4 und 5 sind weitere Ausführungsbeispiele für eine seitliche Entgasung mit dem erfindungsgemäßen Stopfensystem dargestellt. Fig. 4 zeigt eine teilweise geschnittene Draufsicht auf einen Ausschnitt eines Akkumulatorendeckels 25, an welchem ein schwenkbares Tragelement 36 angeordnet ist. Wie in dem geschnittenen Bereich zu erkennen, ist der die Zellenöffnungen miteinander strömungstechnisch verbindende Kanal 28 seitlich mit einem Blindstopfen 37 verschlossen. Oberhalb des Blindstopfens 37 weist der Akkumulatorendeckel 25 eine seitlich angeordnete Aufnahmeöffnung 33 auf, in welche ein Einsatz 34 mit Filterscheibe 23 entsprechend Fig. 3 eingesetzt ist. Der Kanal 35 des Einsatzes 34 ist dabei über die Filterscheibe 23 strömungstechnisch mit dem durch den Stopfenkörper 1 und den Akkumulatorendeckel gebildeten Volumenraum 29 verbunden.

Bei dem Ausführungsbeispiel gemäß Fig. 5 ist seitlich im Akkumulatorendeckel 25 durch eine Aufnahmeöffnung 38 und einen Einsatz 39 ein sich an den Kanal 28 anschließender im wesentlichen senkrecht zu diesem verlaufender Entgasungskanal 40 bereitgestellt, der sich konisch verjüngt und durch eine Filterscheibe 23 hindurch sich anschließend erweiternd seitlich aus dem Akkumulatorendeckel 25 hinaus erstreckt und so eine strömungstechnische Verbindung zwischen dem Zelleninneren und der den Akkumulator umgebenden Atmosphäre bereitstellt.

Durch die Anordnungen gemäß Fig. 4 und 5 wird ein verbesserter Rückzündschutz und Dichtigkeit gegeben, da zu einem das Gas mehrfachen Richtungsänderungen unterworfen wird und zum anderen die Filterscheibe 23 so angeordnet ist, daß äußere Flammen nicht in das Innere des Akkumulators durchschlagen können und letztendlich eine definierte Explosion außerhalb des Zelleninneren erfolgen kann.

Die Anordnungen gemäß Fig. 4 und 5 finden bei kleineren Akkumulatorendeckeln 25 Verwendung. Bei kleineren Akkumulatorendeckeln entsprechend den Fig. 4 und 5 kann der Einsatz 34 aus Platzgründen nicht wie bei der Ausführung entsprechend Fig. 3 angeordnet werden. Bei Fig. 4 erfolgt die rückzündungssichere Entgasung über den durch den reduzierten Abschnitt 5 des Stopfenkörpers 1 gebildeten Volumenraum 29 der äußeren Zelle. Bei Fig. 5 erfolgt eine rückzündungssichere Entgasung der letzten Zelle über den zentralen Entgasungskanal 28, der sich in den Entgasungskanal 40 erstreckt.

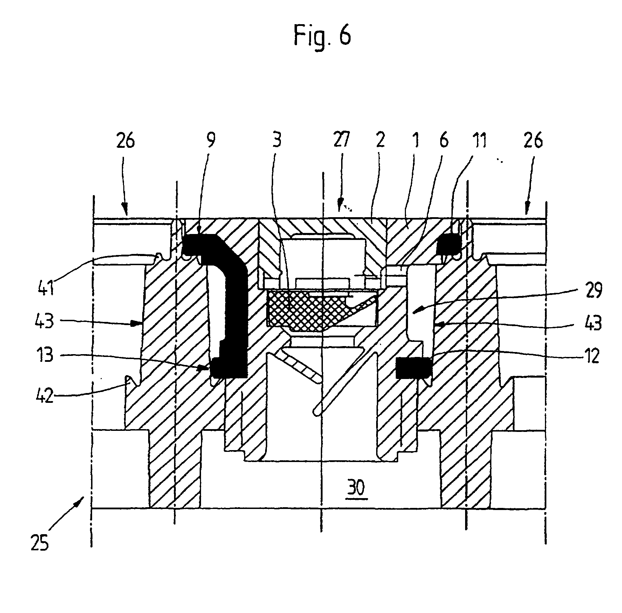

Fig. 6 zeigt ebenfalls in einer geschnittenen Ansicht einen Ausschnitt eines Akkumulatorendeckels 25 mit teilweise dargestellten offenen Zellenöffnungen 26 und einer mit einem Stopfensystem ähnlich den Fig. 1a und 1b verschlossenen Zellenöffnung 27. Zwischen dem Akkumulatorendeckel 25 und dem Stopfenkörper 1 des Stopfensystems wird im Bereich des Abschnitts 5 des Stopfenkörpers 1 ebenfalls ein den Stopfenkörper 1 ringförmig umgebender Volumenraum 29 ausgebildet, welcher über die Öffnung 6 im Stopfenkörper 1 eine strömungstechnische Verbindung mit dem Zelleninneren 30 bereitstellt, die normalerweise durch das Ventilelement 3 unterbrochen ist.

Um die beiden Dichtungsebenen im Bereich der Anschlagfläche 9 und 13 sowohl radial als auch axial sicher abzudichten, weist der Akkumulatorendeckel 25 in den entsprechenden Bereichen der Zellenöffnungen Nocken 41 und 42 auf, die sich in die jeweiligen Dichtungselemente 11 und 12 einpressen. Wie anhand von Fig. 6 zu erkennen, weist der Akkumulatorendeckel 25 eine sich längs des Volumenraums 29 erstreckende Einführungsschräge bzw. Einsatzschräge 43 auf, die für einen besseren Toleranzausgleich sorgt und ein einfacheres Einsetzen des Stopfenkörpers 1 in die Zellenöffnung 27 ermöglicht. Wie in Fig. 6 ebenfalls dargestellt, liegt das Dichtungselement entlang des Volumenraums teilweise vollständig am Stopfenkörper 1 an.

### Bezugszeichenliste

- 1: Stopfenkörper
- 2: Stopfen
- 3: Ventilelement
- 4: Mittelteil
- 5: Abschnitt
- 6: Öffnung
- 7: Abschnitt
- 8: Abschnitt
- 9: Anschlagfläche
- 10: Vorsprung
- 11: Dichtungselement
- 12: Dichtungselement
- 13: Aufnahme
- 14: Zwischenwand
- 15: Zwischenwand
- 16: Abschnitt
- 17: Abschnitt
- 18: Vorsprung
- 19: Abschnitt
- 20a: Anschlagfläche
- 20b: Anschlagfläche
- 21: Öffnung
- 22: Abschnitt
- 23: Filterscheibe
- 24: Vorsprung
- 25: Akkumulatorendeckel
- 26: Zellenöffnung
- 27: Zellenöffnung
- 28: Kanal
- 29: Volumenraum
- 30: Zelleninnere
- 31: Vorsprung
- 32: Aufnahme
- 33: Aufnahmeöffnung
- 34: Einsatz
- 35: Kanal
- 36: Tragelement
- 37: Blindstopfen
- 38: Aufnahmeöffnung
- 39: Einsatz
- 40: Kanal
- 41: Nocken
- 42: Nocken
- 43: Einführungsschräge

- D: Stopfenkörperdurchmesser
- d: Außendurchmesser

## Patentansprüche

1. Stopfensystem zum Verschließen von Zellenöffnungen eines Akkumulators, bestehend aus einem in eine Zellenöffnung (26, 27) einsetzbaren, einen Stopfen (2) und ein Ventilelement (3) aufnehmenden, so eine normalerweise geschlossene, strömungstechnische Verbindung zwischen dem Zelleninneren (30) und der den Akkumulator umgebenden Atmosphäre bereitstellenden Stopfenkörper (1), wobei der Stopfen (2) und/oder der Stopfenkörper (1) eine Durchlaßöffnung (6, 21) aufweisen und der Stopfen (2) entweder die Durchlaßöffnung (6) des Stopfenkörpers (1) oder die eigene Durchlaßöffnung (21) verschließend in den Stopfenkörper (1) einsetzbar ist.

2. Stopfensystem nach Anspruch 1, **dadurch gekennzeichnet, daß** der Stopfenkörper (1) dicht in die Zellenöffnung (26, 27) einsetzbar ist.

3. Stopfensystem nach Anspruch 1 oder Anspruch 2, **dadurch gekennzeichnet, daß** der Stopfenkörper (1) wenigstens ein Dichtungselement (11, 12) aufweist.

4. Stopfensystem nach Anspruch 3, **dadurch gekennzeichnet, daß** das Dichtungselement (11, 12) am Stopfenkörper (1) angeformt ist.

5. Stopfensystem nach Anspruch 3 oder Anspruch 4, **dadurch gekennzeichnet, daß** das Dichtungselement (11, 12) ein O-Ring ist.

6. Stopfensystem nach einem oder mehreren der Ansprüche 1 bis 5, **dadurch gekennzeichnet, daß** der Stopfenkörper (1) in einem Mittelteil (4) wenigstens einen gegenüber dem Stopfenkörperaußendurchmesser (D) reduzierten Abschnitt (5) aufweist.

7. Stopfensystem nach einem oder mehreren der Ansprüche 1 bis 6, **dadurch gekennzeichnet, daß** der Stopfenkörper (1) in seiner Mantelfläche wenigstens eine Öffnung (6) aufweist.

8. Stopfensystem nach einem der vorhergehenden Ansprüche, **dadurch gekennzeichnet, daß** der Stopfenkörper (1) im reduzierten Abschnitt (5) in seiner Mantelfläche wenigstens eine Öffnung (6) aufweist.

9. Stopfensystem nach einem oder mehreren der Ansprüche 1 bis 8, **dadurch gekennzeichnet, daß** jeweils im Bereich der sich an den reduzierten Abschnitt (5) anschließenden Abschnitten (7, 8) des Stopfenkörpers (1) ein Dichtungselement (11, 12) angeordnet ist.

10. Stopfensystem nach einem oder mehreren der Ansprüche 1 bis 9, **dadurch gekennzeichnet, daß** der Stopfenkörper (1) im Inneren einen Abschnitt (16) zur Aufnahme des Ventilelementes (3) aufweist.

11. Stopfensystem nach Anspruch 10, **dadurch gekennzeichnet, daß** der Abschnitt (16) an die Öffnung (6) in der Mantelfläche des Stopfenkörpers (1) angrenzt.

12. Stopfensystem nach einem oder mehreren der Ansprüche 1 bis 11, **dadurch gekennzeichnet, daß** der Stopfenkörper (1) im Inneren wenigstens eine eine Schikane bildende Zwischenwand (14, 15) aufweist.

13. Stopfensystem nach Anspruch 12, **dadurch gekennzeichnet, daß** die Zwischenwand (14, 15) in einem an das Ventilelement (3) angrenzenden Abschnitt (8) angeordnet ist.

14. Stopfensystem nach einem oder mehreren der Ansprüche 1 bis 13, **dadurch gekennzeichnet, daß** der Stopfenkörper (1) in der Zellenöffnung (26, 27) des Akkumulators befestigbar ist.

15. Stopfensystem nach einem oder mehreren der Ansprüche 1 bis 14, **dadurch gekennzeichnet, daß** der Stopfenkörper ein Befestigungselement aufweist.

16. Stopfensystem nach einem oder mehreren der Ansprüche 1 bis 15, **dadurch gekennzeichnet, daß** der Stopfenkörper (1) ein Befestigungselement aufweist.

17. Stopfensystem nach Anspruch 16, **dadurch gekennzeichnet, daß** der Stopfenkörper (1) einen die Zellenöffnung in wenigstens einem Bereich hintergreifenden Vorsprung zur Befestigung aufweist.

18. Stopfensystem nach einem oder mehreren der Ansprüche 1 bis 17, **dadurch gekennzeichnet, daß** der Stopfenkörper (1) zur Befestigung in die Zellenöffnung (26, 27) einpreßbar ist.

19. Stopfensystem nach einem oder mehreren der Ansprüche 1 bis 18, **dadurch gekennzeichnet, daß** der Stopfen (2) dicht in den Stopfenkörper (1) einsetzbar ist.

20. Stopfensystem nach einem oder mehreren der Ansprüche 1 bis 19, **dadurch gekennzeichnet, daß** der Stopfen (2) einen Abschnitt (22) zur Aufnahme einer Filterscheibe (23) aufweist.

21. Stopfensystem nach Anspruch 20, **dadurch gekennzeichnet, daß** die Filterscheibe (23) im Stopfen (2) befestigbar ist.

22. Stopfensystem nach Anspruch 20 oder Anspruch 21, **dadurch gekennzeichnet, daß** der Stopfen (2) wenigstens einen Vorsprung (24) zur Befestigung der Filterscheibe (23) aufweist.

23. Stopfensystem nach einem oder mehreren der Ansprüche 1 bis 22, **dadurch gekennzeichnet, daß** der Stopfen (2) im Stopfenkörper (1) befestigbar ist.

24. Akkumulatorendeckel zur Verwendung des Stopfensystems nach einem oder mehreren der Ansprüche 1 bis 23, **gekennzeichnet durch** einen im Akkumulatorendeckel (25) einsetzbaren, eine strömungstechnische Verbindung zwischen dem Zelleninneren (30) und der den Akkumulator umgebenden Atmosphäre bereitstellenden Einsatz (34, 39), der eine stirnseitige Entgasung ermöglicht sowie wenigstens einem in eine Zellenöffnung (26, 27) des Akkumulatordeckels (25) einsetzbaren, einen Stopfen (2) aufweisenden Stopfenkörper (1), wobei der Stopfen (2) und/oder der Stopfenkörper (1) eine Durchlaßöffnung (6, 21) aufweisen und der Stopfen (2) entweder die Durchlaßöffnung (6) des Stopfenkörpers (1) oder die eigene Durchlaßöffnung (21) verschließend in den Stopfenkörper (1) einsetzbar ist.

25. Akkumulatorendeckel nach Anspruch 24, **dadurch gekennzeichnet, daß** der Einsatz (34, 39) einen trichterförmigen Kanal (35, 40) ausbildet.

26. Akkumulatorendeckel nach Anspruch 24 oder Anspruch 25, **dadurch gekennzeichnet, daß** der Einsatz wenigstens eine Aufnahme für ein Filterelement (23) aufweist.

27. Akkumulatorendeckel nach Anspruch 26, **dadurch gekennzeichnet, daß** das Filterelement unmittelbar an den durch einen Stopfenkörper (1) und den Akkumulatorendeckel (25) gebildeten Volumenraum (29) angrenzend anordbar ist.

28. Akkumulatorendeckel nach einem der vorhergehenden Ansprüche, **dadurch gekennzeichnet, daß** der Einsatz (34, 39) dicht einsetzbar ist.

29. Akkumulatorendeckel nach einem oder mehreren der Ansprüche 24 bis 28, **dadurch gekennzeichnet, daß** der Einsatz (34, 39) ein Stopfen entsprechend dem Stopfensystem nach einem oder mehreren der Ansprüche 1 bis 23 ist.

30. Akkumulatorendeckel nach einem oder mehreren der Ansprüche 24 bis 29, **dadurch gekennzeichnet, daß** dieser im Bereich der Zellenöffnungen (26, 27) nockenartige Vorsprünge (41, 42) aufweist, die ein axiales Abdichten der Zellenöffnungen ermöglichen.

## Claims

1. Plug system for closing cell openings of an accumulator, comprising a plug body (1) which can be inserted into a cell opening (26,27), accommodates a plug (2) and a valve element (3) and thus provides a normally closed, fluidic connection between the cell interior (30) and the atmosphere surrounding the accumulator, the plug (2) and/or the plug body (1) having a passage opening (6,21) and the plug (2) being insertable into the plug body (1) closing either the passage opening (6) of the plug body (1) or its own passage opening (21).

2. Plug system according to Claim 1, **characterized in that** the plug body (1) can be inserted in a tight-fitting manner into the cell opening (26,27).

3. Plug system according to Claim 1 or Claim 2, **characterized in that** the plug body (1) has at least one sealing element (11,12).

4. Plug system according to Claim 3, **characterized in that** the sealing element (11,12) is integrally formed on the plug body (1).

5. Plug system according to Claim 3 or Claim 4, **characterized in that** the sealing element (11,12) is an O-ring.

6. Plug system according to one or more of Claims 1 to 5, **characterized in that** the plug body (1) has, in a central part (4), at least one section (5) which is reduced in comparison with the outside diameter (D) of the plug body.

7. Plug system according to one or more of Claims 1 to 6, **characterized in that** the plug body (1) has at least one opening (6) in its circumferential surface.

8. Plug system according to one of the preceding claims, **characterized in that** the plug body (1) has at least one opening (6) in its circumferential surface in the reduced section (5).

9. Plug system according to one or more of Claims 1 to 8, **characterized in that** a respective sealing element (11,12) is arranged in the region of those sections (7,8) of the plug body (1) which adjoin the reduced section (5).

10. Plug system according to one or more of Claims 1 to 9, **characterized in that** the plug body (1) has, in the interior, a section (16) for accommodating the valve element (3).

11. Plug system according to Claim 10, **characterized in that** the section (16) is adjacent to the opening (6) in the circumferential surface of the plug body (1).

12. Plug system according to one or more of Claims 1 to 11, **characterized in that** the plug body (1) has, in the interior, at least one partition (14,15) forming a chicane.

13. Plug system according to Claim 12, **characterized in that** the partition (14,15) is arranged in a section (8) adjacent to the valve element (3).

14. Plug system according to one or more of Claims 1 to 13, **characterized in that** the plug body (1) can be fastened in the cell opening (26,27) of the accumulator.

15. Plug system according to one or more of Claims 1 to 14, **characterized in that** the plug body has a fastening element.

16. Plug system according to one or more of Claims 1 to 15, **characterized in that** the plug body (1) has a fastening element.

17. Plug system according to Claim 16, **characterized in that** the plug body (1) has a projection which grips behind the cell opening in at least one region for fastening purposes.

18. Plug system according to one or more of Claims 1 to 17, **characterized in that** the plug body (1) can be pressed into the cell opening (26,27) for fastening purposes.

19. Plug system according to one or more of Claims 1 to 18, **characterized in that** the plug (2) can be inserted into the plug body (1) in a tight-fitting manner.

20. Plug system according to one or more of Claims 1 to 19, **characterized in that** the plug (2) has a section (22) for accommodating a filter disc (23).

21. Plug system according to Claim 20, **characterized in that** the filter disc (23) can be fastened in the plug (2).

22. Plug system according to Claim 20 or Claim 21, **characterized in that** the plug (2) has at least one projection (24) for fastening the filter disc (23).

23. Plug system according to one or more of Claims 1 to 22, **characterized in that** the plug (2) can be fastened in the plug body (1).

24. Accumulator cover for using the plug system according to one or more of Claims 1 to 23, **characterized by** an insert (34,39) which can be inserted in the accumulator cover (25), provides a fluidic connection between the cell interior (30) and the atmosphere surrounding the accumulator and which enables degassing on the end side, and by at least one plug body (1) which can be inserted into a cell opening (26,27) of the accumulator cover (25) and has a plug (2), the plug (2) and/or the plug body (1) having a passage opening (6,21) and the plug (2) being insertable into the plug body (1) closing either the passage opening (6) of the plug body (1) or its own passage opening (21).

25. Accumulator cover according to Claim 24, **characterized in that** the insert (34,39) forms a funnel-shaped channel (35,40).

26. Accumulator cover according to Claim 24 or Claim 25, **characterized in that** the insert has at least one receptacle for a filter element (23).

27. Accumulator cover according to Claim 26, **characterized in that** the filter element can be arranged directly adjacent to the volumetric space (29) formed by a plug body (1) and the accumulator cover (25).

28. Accumulator cover according to one of the preceding claims, **characterized in that** the insert (34,39) can be inserted in a tight-fitting manner.

29. Accumulator cover according to one or more of Claims 24 to 28, **characterized in that** the insert (34,39) is a plug corresponding to the plug system according to one or more of Claims 1 to 23.

30. Accumulator cover according to one or more of Claims 24 to 29, **characterized in that** the latter has, in the region of the cell openings (26,27), cam-like projections (41,42) which enable axial sealing of the cell openings.

## Revendications

1. Système de bouchage servant à fermer les orifices d'élément d'un accumulateur et se composant d'un corps de bouchon (1) qui peut être inséré dans un orifice d'élément (26, 27) et qui reçoit un bouchon (2) et un élément formant soupape (3) et, ainsi, crée une liaison d'écoulement, fermée dans des conditions normales, entre l'intérieur d'élément (30) et l'atmosphère environnant l'accumulateur, le bouchon (2) et/ou le corps de bouchon (1) comportant un orifice de passage (6, 21) et le bouchon (2) pouvant être inséré dans le corps de bouchon (1) en ayant pour effet de fermer soit l'orifice de passage (6) du corps de bouchon (1) soit son propre orifice de passage (21).

2. Système de bouchage selon la revendication 1, **caractérisé en ce que** le corps de bouchon (1) peut être inséré de manière étanche dans l'orifice d'élément (26, 27).

3. Système de bouchage selon la revendication 1 ou la revendication 2, **caractérisé en ce que** le corps de bouchon (1) comporte au moins un élément d'étanchéité (11, 12).

4. Système de bouchage selon la revendication 3, **caractérisé en ce que** l'élément d'étanchéité (11, 12) est formé en continuité sur le corps de bouchon (1).

5. Système de bouchage selon la revendication 3 ou la revendication 4, **caractérisé en ce que** l'élément d'étanchéité (11, 12) est un anneau torique.

6. Système de bouchage selon une ou plusieurs des revendications 1 à 5, **caractérisé en ce que** le corps de bouchon (1) comporte, dans une partie médiane (4), au moins une section (5) réduite par rapport au diamètre extérieur (D) du corps de bouchon.

7. Système de bouchage selon une ou plusieurs des revendications 1 à 6, **caractérisé en ce que** le corps de bouchon (1) comporte dans sa surface d'enveloppe au moins un orifice (6).

8. Système de bouchage selon l'une des revendications précédentes, **caractérisé en ce que** le corps de bouchon (1) comporte, dans la section réduite (5), au moins un orifice (6) dans sa surface d'enveloppe.

9. Système de bouchage selon une ou plusieurs des revendications 1 à 8, **caractérisé en ce qu'**un élément d'étanchéité (11, 12) est disposé dans la zone de chacune des sections (7, 8) se raccordant à la section réduite (5) du corps de bouchon (1).

10. Système de bouchage selon une ou plusieurs des revendications 1 à 9, **caractérisé en ce que** le corps de bouchon (1) comporte, à l'intérieur, une section (16) servant de logement à l'élément formant soupape (3).

11. Système de bouchage selon la revendication 10, **caractérisé en ce que** la section (16) avoisine l'orifice (6) situé dans la surface d'enveloppe du corps de bouchon (1).

12. Système de bouchage selon une ou plusieurs des revendications 1 à 11, **caractérisé en ce que** le corps de bouchon (1) comporte, à l'intérieur, au moins une cloison (14, 15) formant une chicane.

13. Système de bouchage selon la revendication 12, **caractérisé en ce que** la cloison (14, 15) est disposée dans une section (8) avoisinant l'élément formant soupape (3).

14. Système de bouchage selon une ou plusieurs des revendications 1 à 13, **caractérisé en ce que** le corps de bouchon (1) peut être fixé dans l'orifice d'élément (26, 27) de l'accumulateur.

15. Système de bouchage selon une ou plusieurs des revendications 1 à 14, **caractérisé en ce que** le corps de bouchon comporte un élément de fixation.

16. Système de bouchage selon une ou plusieurs des revendications 1 à 15, **caractérisé en ce que** le corps de bouchon (1) comporte un élément de fixation.

17. Système de bouchage selon la revendication 16, **caractérisé en ce que** le corps de bouchon (1) comporte, à des fins de fixation, une saillie saisissant l'orifice d'élément à revers dans au moins une zone.

18. Système de bouchage selon une ou plusieurs des revendications 1 à 17, **caractérisé en ce que** le corps de bouchon (1) peut être enfoncé dans l'orifice d'élément (26, 27) à des fins de fixation.

19. Système de bouchage selon une ou plusieurs des revendications 1 à 18, **caractérisé en ce que** le bouchon (2) peut être inséré de manière étanche dans le corps de bouchon (1).

20. Système de bouchage selon une ou plusieurs des revendications 1 à 19, **caractérisé en ce que** le bouchon (2) comporte une section (22) servant de logement à une rondelle de filtrage (23).

21. Système de bouchage selon la revendication 20, **caractérisé en ce que** la rondelle de filtrage (23) peut être fixée dans le bouchon (2).

22. Système de bouchage selon la revendication 20 ou la revendication 21, **caractérisé en ce que** le bouchon (2) comporte au moins une saillie (24) pour fixer la rondelle de filtrage (23).

23. Système de bouchage selon une ou plusieurs des revendications 1 à 22, **caractérisé en ce que** le bouchon (2) peut être fixé dans le corps de bouchon (1).

24. Couvercle d'accumulateur destiné à utiliser le système de bouchage selon une ou plusieurs des revendications 1 à 23, **caractérisé par** un insert (34, 39) qui peut être mis dans le couvercle d'accumulateur (25), qui crée une liaison d'écoulement entre l'intérieur d'élément (30) et l'atmosphère environnant l'accumulateur et qui permet un dégazage frontal, ainsi que par au moins un corps de bouchon (1) pouvant être inséré dans un orifice d'élément (26, 27) du couvercle d'accumulateur (25) et comportant un bouchon (2), le bouchon (2) et/ou le corps de bouchon (1) ayant un orifice de passage (6, 21) et le bouchon (2) pouvant être inséré dans le corps de bouchon (1) avec pour effet de fermer l'orifice de passage (6) du corps de bouchon (1) ou son propre orifice de passage (21).

25. Couvercle d'accumulateur selon la revendication 24, **caractérisé en ce que** l'insert (34, 39) forme un canal (35, 40) en entonnoir.

26. Couvercle d'accumulateur selon la revendication 24 ou la revendication 25, **caractérisé en ce que** l'insert comporte au moins un logement destiné à un élément de filtrage (23).

27. Couvercle d'accumulateur selon la revendication 26, **caractérisé en ce que** l'élément de filtrage peut être disposé juste à côté de l'espace (29) formé par un corps de bouchon (1) et par le couvercle d'accumulateur (25).

28. Couvercle d'accumulateur selon l'une des revendications précédentes, **caractérisé en ce que** l'insert (34, 39) peut être inséré de manière étanche.

29. Couvercle d'accumulateur selon une ou plusieurs des revendications 24 à 28, **caractérisé en ce que** l'insert (34, 39) est un bouchon conforme au système de bouchage selon une ou plusieurs des revendications 1 à 23.

30. Couvercle d'accumulateur selon une ou plusieurs des revendications 24 à 29, **caractérisé en ce que** celui-ci comporte, dans la zone des orifices d'élément (26, 27), des saillies de type mentonnet (41, 42) qui permettent une étanchéification axiale des orifices d'élément.
